Europäisches Patentamt

European Patent Office

Office européen des brevets

(11) Numéro de publication: **0 401 074**
**A1**

## (12) DEMANDE DE BREVET EUROPEEN

(21) Numéro de dépôt: **90401281.2**

(51) Int. Cl.5: **H04N 5/335**

(22) Date de dépôt: **15.05.90**

(30) Priorité: **02.06.89 FR 8907306**

(43) Date de publication de la demande:
**05.12.90 Bulletin 90/49**

(84) Etats contractants désignés:
**DE GB**

(71) Demandeur: **THOMSON-CSF**
**51, Esplanade du Général de Gaulle**
**F-92800 Puteaux(FR)**

(72) Inventeur: **Le Bars, Jean-François**
**THOMSON-CSF, SCPI, Cédex 67**
**F-92045 Paris la Défense(FR)**

(74) Mandataire: **Turlèque, Clotilde et al**
**THOMSON-CSF SCPI**
**F-92045 PARIS LA DEFENSE CEDEX 67(FR)**

(54) **Méthode d'amélioration de l'image obtenue au moyen de chaînes optroniques à moyens capteurs surfaciques et dispositif pour la mise en oeuvre de cette méthode.**

(57) L'invention concerne une méthode et un disposi-tif pour améliorer l'image obtenue au moyen de chaînes optroniques à moyens capteurs surfaciques (7). Selon l'invention on élimine l'effet de réseau entre deux éléments sensibles élémentaires, en réa-lisant par microbalayage une analyse de tous les points de l'image, qui soit compatible avec la constante d'intégration de l'oeil et la durée d'intégra-tion des moyens capteurs surfaciques (7). Cet effet met en oeuvre un dispositif optomécanique (5, 6) permettant d'analyser par microbalayage les zones insensibles d'une image correspondant aux moyens capteurs (7) de type surfacique à intégration ou non.

FIG. 2

EP 0 401 074 A1

# METHODE D'AMELIORATION DE L'IMAGE OBTENUE AU MOYEN DE CHAINES OPTRONIQUES A MOYENS CAPTEURS SURFACIQUES, ET DISPOSITIF POUR LA MISE EN OEUVRE DE CETTE METHODE

La présente invention a pour objet une méthode d'amélioration de l'image obtenue au moyen de chaînes optroniques à moyens capteurs surfaciques. Elle vise également un dispositif pour la mise en oeuvre de cette méthode.

Lors de l'étude des fonctions de transfert de modulation (F.T.M.) des différents ensembles qui interviennent dans une chaîne optronique comprenant des moyens capteurs surfaciques, par exemple du type CCD (dispositif à transfert de charge), on a constaté que, de loin, la résolution est fixée par le capteur surfacique. La résolution du capteur surfacique est en fait diminuée du fait du taux de remplissage du pixel (élément sensible élémentaire). Par exemple, dans le cas d'un détecteur Pt.Si (platine silicium) sensible dans la bande spectrale des 3 à 5 microns, le taux de remplissage du pixel est typiquement de 40%. On constate ainsi qu'il existe un "trou" entre deux éléments sensibles élémentaires principalement liés à la technologie mise en oeuvre. La fonction de transfert de modulation résultant d'un tel réseau s'exprime sous la forme d'un produit de deux fonctions SinC (SinX/X), à savoir: une relative au pixel réellement sensible et correspondant à une dimension faible, de 16 um par exemple, et l'autre relative à la trame du réseau porteur des pixels sensibles, présentant une dimension de 26 um par exemple. C'est cette dernière fonction qui affecte la fonction de transfert de modulation des moyens capteurs et qui fournit un zéro de fonction de transfert de modulation, le plus tôt dans le spectre des fréquences.

Un objet de l'invention est de fournir une méthode permettant de supprimer l'effet dû à la trame du réseau porteur en modifiant la fonction de transfert de modulation équivalente des moyens capteurs de façon à obtenir un zéro de F.T.M. le plus loin possible dans le spectre des fréquences.

Un autre objet de l'invention est de fournir un dispositif de conception relativement simple permettant une mise en oeuvre efficace de la méthode selon l'invention.

La présente invention a donc pour objet une méthode d'amélioration de l'image obtenue au moyen de chaînes optroniques à moyens capteurs surfaciques, caractérisées en ce que, afin d'éliminer l'effet de trame du réseau porteur des éléments sensibles élémentaires (pixels), on réalise par microbalayage une analyse de tous les points de l'image, qui soit compatible avec le temps d'intégration de l'oeil et le temps d'intégration des moyens capteurs surfaciques de la chaîne optronique.

La présente invention a également pour objet un dispositif pour la mise en oeuvre de cette méthode, ce dispositif comportant un dispositif optomécanique permettant d'analyser par microbalayage les zones aveugles ou insensibles d'une image correspondant à des moyens capteurs de type surfacique, à intégration ou non, ce dispositif optomécanique permettant de mettre en oeuvre des fréquences de microbalayage compatibles à la fois avec le temps d'intégration de l'oeil et le temps d'intégration des moyens capteurs.

Dans une première forme de réalisation de l'invention, le dispositif optomécanique est constitué d'une lame à faces planes et parallèles coopérant avec au moins un dispositif piézoélectrique destiné à lui imprimer des micromouvements rotationnels.

Dans une seconde forme de réalisation de l'invention, le dispositif optomécanique est constitué par un miroir tournant coopérant avec au moins un dispositif piézoélectrique destiné à lui imprimer des microrotations.

Dans toutes ses formes de réalisation, chaque dispositif piézoélectrique est avantageusement associé à un dispositif de commande synchronisé qui, par l'intermédiaire d'un sélecteur retard, commande une ligne à retard de moyens vidéo associés au dispositif de l'invention, en fonction du point de l'image analysé.

Les moyens capteurs surfaciques seront avantageusement choisis parmi les capteurs du type C.C.D., c'est-à-dire les dispositifs à transfert de charge ou à commutation électronique, les capteurs du type C.S.D., c'est-à-dire les dispositifs à balayage de charge, et plus avantageusement ceux du type à détecteurs infrarouges, sensibles en bande 3-5 microns du type platine silicium (Pt.Si), les moyens capteurs du type C.I.D., c'est-à-dire les dispositifs à injection de charge, et les dispositifs matriciels à éléments commutés.

Le principe de l'invention est applicable quelle quesoit la zone spectrale de sensibilité des moyens capteurs et s'applique tant aux dispositifs visibles qu'aux dispositifs fonctionnant en infrarouge.

Dans les formes de réalisation exposées ci-dessus, il sera judicieux d'associer ce type de microbalayage à un zoom électronique, présentant un rapport de 2 à 4, dans le cas où le dispositif optronique en question serait limité en performance par le couple opérateur/moniteur.

D'autres avantages et caractéristiques de la présente invention apparaîtront à la lecture de la description suivante d'un mode de mise en oeuvre non limitatif, en se référant au dessin annexé dans lequel :

La figure 1 est une représentation schématique du principe de microbalayage selon l'invention;

et la figure 2 est une vue schématique du dispositif optomécanique pour la mise en oeuvre du microbalayage illustré sur la figure 1.

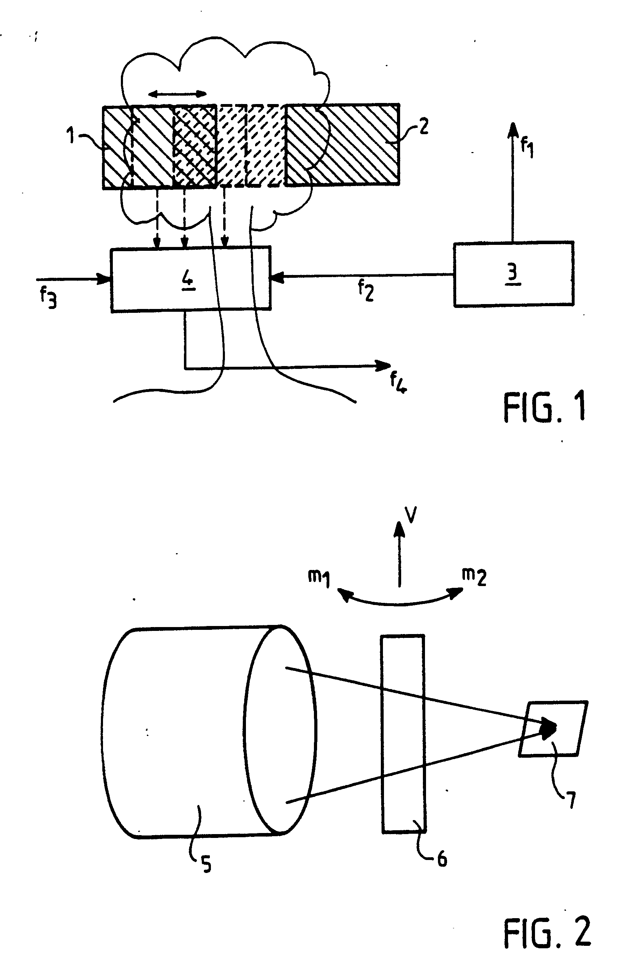

En se reportant plus particulièrement à la figure 1, en prenant pour exemple une caméra à capteurs Pt.Si. du commerce, on a choisi un microbalayage sinusoïdal horizontal d'amplitude 6,5 μm et de fréquence 5 Hz, compatible avec le temps d'intégration de l'oeil (de l'ordre de 0,2 seconde) et la durée d'une trame (20ms selon la norme CCIR), ces paramètres évitant toutefois le flou-image lors du mouvement. En effet entre deux trames 1 et 2, le capteur s'est virtuellement déplacé au plus de 3,27 μm, ce qui se traduit par une dégradation de la fonction de transfert de modulation globale très faible. Dans les deux positions extrêmes du capteur, la vitesse relative est nulle ce qui n'affecte en aucun cas la F.T.M. globale et contribue à l'obtention d'un bon rapport signal à bruit perçu.

On a prévu une commande piézo 3 agissant sélectivement selon f1 avec le dispositif piézoélectrique et selon f2 en sélecteur retard avec la ligne à retard 4, ce qui permet de décaler temporellement le signal vidéo détecté selon f3 de la bonne quantité de manière à rephaser l'image avant présentation selon f1 à l'écran vidéo de contrôle. Dans ce mode de réalisation, on a choisi trois retards à savoir 0,27 ns, 54 ns, correspondant à des écarts du capteur par rapport à sa position originale de 0 um, 6,5 um, 13 um. Ainsi , par exemple, pour un capteur dont la dimension de la surface sensible est seulement 70% du pas du réseau, on peut envisager un échantillonnage de l'image de 1024 points par ligne pour un nombre de pixels du réseau égal à 512, ce qui est compatible des autres fonctions de transfert de modulation de la chaîne optronique.

Dans une variante de réalisation, on peut également réaliser le balayage de trame à trame en tout-ou-rien. De même, on peut envisager, si nécessaire, une ligne à retard à plus grand nombre de sorties.

Sur la figure 2 est schématiquement représenté un dispositif pour la mise en oeuvre du microbalayage exposé ci-dessus. Dans ce dispositif, le faisceau convergent obtenu à partir d'un dispositif optique 5 est défléchi au moyen d'une lame plane à faces parallèles 6, à laquelle un dispositif piézoélectrique, non représenté sur le dessin, imprime des micromouvements rotationels alternatifs selon m1 m2, suivant l'axe vertical ν de la dite lame 6, après quoi le faisceau issu de la lame 6 vient frapper le capteur 7 du type à détecteur infrarouge Pt Si Le débattement (crête/crête) de la lame qui présente avantageusement une épaisseur de 8 mm, doit être environ de 2,17 mrd, soit par exemple pour un diamètre de lame de 30 mm, un déplacement du piézo de 22 um, dans le cas où le piézo est monté à mi-hauteur. Cette valeur est dans le domaine des piézos couramment utilisés .

Selon l'invention, on peut envisager un microbalayage circulaire au moyen d'une seule lame plane à faces parallèles qu'on excite avec deux dispositifs piézoélectriques en quadrature ou bien avec deux lames en quadrature excitées par deux dispositifs piézoélectriques séparés.

Il est clair que l'invention n'est nullement limitée aux formes et modes de réalisation décrits ci-dessus, mais qu'elle englobe toutes les modifications et variantes issues du même principe de base, à savoir la mise en oeuvre d'un microbalayage, circulaire ou non, afin de supprimer l'effet de réseau entre deux éléments sensibles élémentaires.

## Revendications

1) Méthode d'amélioration de l'image obtenue au moyen de chaînes optroniques à moyens capteurs surfaciques, caractérisée en ce que, afin d'éliminer l'effet de réseau porteur des éléments sensibles élémentaires (pixels), on réalise par microbalayage une analyse de tous les points de l'image, qui soit compatible avec le temps d'intégration de l'oeil et le temps d'intégration des moyens capteurs surfaciques.

2) Dispositif pour la mise en oeuvre de la méthode selon la revendication 1, caractérisé en ce qu'il comporte un dispositif optomécanique permettant d'analyser par microbalayage les zones insensibles ou aveugles d'une image correspondant aux moyens capteurs de type surfacique, à intégration ou non, ce dispositif optomécanique (3,5, ,6 ,7) permettant de mettre en oeuvre des fréquences de microbalayage compatibles à la fois avec le temps d'intégration de l'oeil et le temps d'intégration des moyens capteurs.

3) Dispositif selon la revendication 2, caractérisé en ce que le dispositif optomécanique est constitué d'une lame à faces planes et parallèles (6) et coopérant avec au moins un dispositif piézoélectrique destiné à imprimer à la dite lame des micromouvements rotationels.

4) Dispositif selon la revendication 2, caractérisé en ce que le dispositif optomécanique est constitué par un miroir opérant avec au moins un dispositif piézoélectrique destiné à lui imprimer des micromouvements rotationels.

5) Dispositif selon l'une quelconque des revendications 2 à 4, caractérisé en ce que chaque dispositif piézoélectrique est associé à un dispositif de commande synchronisé (3) qui, par l'intermédiaire d'un sélecteur retard, commande une ligne à retard (4) de la vidéo en fonction du point de l'image analysé.

6) Dispositif selon l'une quelconque des revendications 2 à 5 caractérisé en ce que, afin d'obtenir un microbalayage circulaire, on met en oeuvre avec une lame à faces planes et parallèles deux dispositifs piézoélectriques montés en quadrature.

7) Dispositif selon l'une quelconque des revendications 2 à 5 caractérisé en ce que, afin d'obtenir un microbalayage circulaire, on met en oeuvre deux dispositifs piézoélectriques excités en quadrature coopérant avec deux lames à faces planes et parallèles.

8) Dispositif selon l'une quelconque des revendications 2 à 7, caractérisé en ce qu'il comporte un zoom électronique.

9) Dispositif selon l'une quelconque des revendications 1 à 8, caractérisé en ce que les moyens capteurs sont choisis parmi les capteurs du type C.C.D (dispositifs à transfert de charges ou à commutations électroniques), les capteurs du type C.S.D. (dispositifs à balayage de charge), les capteurs du type C.I.D. (dispositifs à injection de charges) et les dispositifs matriciels à éléments commutés.

10) Dispositif selon la revendication 9, caractérisé en ce que les moyens capteurs sont constitués par un capteur du type à détecteur Pt.Si. (platine-silicium) sensible en bande infrarouge de 3 à 5 microns.

11) Dispositif selon la revendication 9 caractérisé en ce que les moyens capteurs sont constitués par un capteur à détecteur M.C.T. (mercure-cadmium-tellure) sensible en bandes infrarouges de 3 à 5 microns ou et 8 à 12 microns.

FIG. 1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 289 182  (GEC-MARCONI LTD) * Colonne 2, lignes 24-49; colonne 3, ligne 24 - colonne 4, ligne 18; colonne 4, ligne 45 - colonne 5, ligne 20; colonne 7, lignes 2-10; figures 4,5 * | 1-4 | H 04 N    5/335 |
| A | --- | 5 | |
| X | PATENT ABSTRACTS OF JAPAN, vol. 11, no. 81 (E-488)[2528], 12 mars 1987; & JP-A-61 236 282 (MATSUSHITA ELECTRIC IND. CO., LTD) 21-10-1986 * Résumé * | 1-3 | |
| A | --- PATENT ABSTRACTS OF JAPAN, vol. 13, no. 113 (E-729)[3461], 17 mars 1989; & JP-A-63 284 979 (FUJITSU LTD) 22-11-1988 * Résumé * | 6,7 | |
| A | --- EP-A-0 065.121  (OPTIC-ELECTRONIC CORP.) * Page 8, ligne 32 - page 9, ligne 28; figure 1 * ----- | 10,11 | DOMAINES TECHNIQUES RECHERCHES (Int. Cl.5)  H 04 N |

Le présent rapport a été établi pour toutes les revendications

| Lieu de la recherche | Date d'achèvement de la recherche | Examinateur |
|---|---|---|
| LA HAYE | 10-09-1990 | BEQUET T.P. |